# EUROPÄISCHE PATENTANMELDUNG

(11) **EP 3 671 669 A1**
(43) Veröffentlichungstag der Anmeldung: **24.06.2020**
(21) Anmeldenummer: 19216839.1
(22) Anmeldetag: 17.12.2019
(51) Int. Cl.: G07C 9/00, G06F 21/44

(54) **ZUGANGSKONTROLLVORRICHTUNG UND VERFAHREN ZUR ÜBERPRÜFUNG EINER ZUGANGSANFRAGE IN EINER ZUGANGSKONTROLLVORRICHTUNG**

(30) Priorität: 17.12.2018 DE 102018132433
(71) Anmelder: Bundesdruckerei GmbH, 10969 Berlin (DE)
(72) Erfinder: Wilke, Andreas, 13509 Berlin (DE); Bastian, Paul, 10243 Berlin (DE); Haase, Frank, 10369 Berlin (DE)
(74) Vertreter: Glawe, Delfs, Moll

(57) **Zusammenfassung**

Verfahren zur Überprüfung einer Zugangsanfrage in einer Zugangskontrollvorrichtung (100), um festzustellen, ob die Zugangsanfrage von einem systemkonformen physikalischen ID-Token (110) ausgeht oder nicht, indem mindestens eine kennzeichnende physikalische Eigenschaft des systemkonformen ID-Tokens (110) durch die Zugangskontrollvorrichtung (100) überprüft wird.

## Beschreibung

### Technisches Gebiet

Die vorliegende Erfindung betrifft eine Zugangskontrollvorrichtung und ein Verfahren zur Überprüfung einer Zugangsanfrage in einer Zugangskontrollvorrichtung.

### Beschreibung des Standes der Technik

Verfahren zur Authentisierung, d.h. zur Überprüfung der Identität und Authentizität eines Kommunikationspartners, sowie zur Durchführung derartiger Verfahren geeignete Zugangskontrollvorrichtungen sind bekannt.

Übliche Zugangskontrollvorrichtungen kontrollieren ein gespeichertes digitales Attribut auf einem physikalischen ID-Token, indem Sie im ersten Schritt über einen sicheren Kanal das Attribut von der Karte abfordern und es im zweiten Schritt mit einer abgespeicherten White- bzw. Blacklist vergleichen. Mit Hilfe der White- bzw. Blacklists entscheidet die Steuerung, ob der anfragenden ID Zutritt zu einem Sicherheitsbereich gewährt wird oder nicht. Wenn die übermittelte ID beispielsweise in der Whitelist hinterlegt ist, wird der Zugang in den Sicherheitsbereich gewährt. So ist bspw. aus der DE 10 2015 202 308 A1 ein Zugangsverfahren zur Aushandlung eines verschlüsselten Kanals, der für die Zugangskontrolle benutzt wird, bekannt. In dem bekannten Verfahren werden unter Verwendung von jeweiligen asymmetrischen Schlüsseln ausgehandelte symmetrische Sitzungsschlüssel in einem Terminal der Zugangskontrollvorrichtung einerseits und in dem ID-Token (Zugriffstoken) andererseits persistent gespeichert und bei der nächsten Kommunikation erneut verwendet.

Als ID-Token werden typischerweise Chipkarten verwendet, die über einen auslesbaren Chip verfügen. Die Kopplung mit einem Lesegerät oder Terminal der Zugangskontrollvorrichtung erfolgt dabei zunehmend kontaktlos mittels RFID und Nahfeldkopplung.

Aus der DE 10 2014 119 663 A1 ist eine Chipkarte bekannt, bei der zur Regelung eines Energieeintrags über eine Kopplungsstruktur abhängig von dem Magnetfeld, dem die Chipkarte bei der Kopplung ausgesetzt ist, eine Variierung der Resonanzfrequenz der Antenne der Chipkarte vorgesehen ist.

Aus der DE 10 2014 002 207 A1 ist ein Authentisierungsverfahren bekannt, bei dem zusätzlich zu der bekannten Sicherheitsinformation eine sich veränderbare dynamische Sicherheitsinformation verwendet wird, die sich aufgrund eines physikalischen, mathematischen oder chemischen Parameters oder Einflusses, zeit- oder ortsabhängig, entsprechend einer in der Authentisierungseinrichtung hinterlegten Regel oder durch das Verhalten, die Sprechweise der Person oder eine Eigenschaft der Person oder des Gegenstandes verändert.

### Zusammenfassung der Erfindung

Ausgehend hiervon werden erfindungsgemäß ein Verfahren zur Überprüfung einer Zugangsanfrage in einer Zugangskontrollvorrichtung mit den Merkmalen des Anspruchs 1 sowie ein Terminal mit den Merkmalen des Anspruchs 9 und eine Zugangskontrollvorrichtung mit den Merkmalen des Anspruchs 10 vorgeschlagen.

Die Erkenntnis der Erfindung liegt darin begründet, bei einer Authentisierungsanfrage zu überprüfen, ob die Anfrage auch wirklich von dem "korrekten" physikalischen Datenträger ausgeht. So würde beispielsweise eine Übermittelung der Authentisierungsanfrage über eine passende Antenne, die an einem tragbaren Computer (Laptop, Tablet o.dgl.) angeschlossen ist, oder über ein Mobilfunkgerät ebenfalls die Tür öffnen. Über diesen Weg wird das Sicherheitsmerkmal "Besitz eines passenden Tokens" ausgehebelt. Um dies auszuschließen, wird erfindungsgemäß mindestens eine kennzeichnende physikalische Eigenschaft des systemkonformen ID-Tokens durch die Zugangskontrollvorrichtung überprüft. "Systemkonform" in diesem Zusammenhang bedeutet eine Konformität des ID-Tokens mit dem System der Zugangskontrollvorrichtung.

Die zu überprüfende kennzeichnende physikalische Eigenschaft des systemkonformen ID-Tokens kann bspw. die Rechenleistung des anfragenden ID-Tokens sein, ausgehend von der Erkenntnis, dass ein systemkonformer ID-Token eine zuordenbare Rechenleistung aufweist. Insbesondere verfügt eine typischerweise als ID-Token in Frage kommende Chipkarte über beschränkte Rechenressourcen, während ein typisches "Umgehungsgerät" eine im Vergleich dazu deutlich höhere Kapazität aufweist.

Wenn ein ID-Token in Form einer Chipkarte/Smartcard eine gesicherte Verbindung zu einem Terminal (Lesegerät) einer Zugangskontrollvorrichtung aufbaut, so geschieht das üblicherweise über gängige kryptographische Verfahren. Bei diesen Verfahren wird dem ID-Token eine signifikante Rechenleistung abverlangt. Da der ID-Token stark beschränkte Ressourcen hat, ist die Dauer der abzuleistenden Rechenarbeit abhängig vom Stromverbrauch (CPU-Taktung). Der Zusammenhang zwischen Stromverbrauch (beispielsweise gemessen am Lesegerät, das über die elektromagnetische Kopplung die Energie zur Verfügung stellt) und Rechenleistung (beispielsweise Dauer einer kryptographischen Operation) kann ausgenutzt werden, um festzustellen, ob tatsächlich ein physikalischer Träger mit stark beschränkten Ressourcen vorliegt (insbesondere im Vergleich zu einem leistungsstarken Laptop mit angebauter Antenne).

Eine Messung der Zeitdauer der Abarbeitung einer charakteristischen Rechenoperation auf dem ID-Token kann daher ein Maß für die tatsächliche Rechenleistung eines anfragenden ID-Tokens darstellen.

Ergänzend oder alternativ kann die Messung des Stromverbrauchs über die elektromagnetische Kopplung ein Maß für die tatsächliche Rechenleistung eines anfragenden ID-Tokens darstellen.

Ergänzend oder alternativ kann die Messung einer Verschiebung der charakteristischen Resonanzfrequenz des ID-Tokens bei der Ankopplung mit dem Terminal/Lesegerät der Zugangskontrollvorrichtung ein Maß für eine kennzeichnende physikalische Eigenschaft des systemkonformen ID-Tokens darstellen.

Der oder die erhobenen Messwerte werden mit für systemkonforme ID-Token typischen bzw. zulässigen hinterlegten Referenzwerten verglichen. Bei einem positiven Vergleich wird der Anfrage stattgegeben und der Authentisierungsvorgang wird wie üblich fortgeführt. Bei einem negativen Vergleich wird der Authentisierungsvorgang abgebrochen.

Die Erfindung stellt somit ein sogenanntes Angriffserkennungssystem (Intrusion Detection System, IDS) dar.

Im Sinne der vorliegenden Erfindung bezeichnet der Begriff "ID-Token" eine Vorrichtung, wie beispielsweise ein tragbares elektronisches Gerät, zum Beispiel einen sogenannten USB-Stick, oder ein Dokument, insbesondere ein Wert-oder Sicherheitsdokument. Unter einem "Dokument" werden papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung von zumindest einem Attribut integriert ist.

Eine Zugangskontrollvorrichtung bezeichnet im Rahmen der vorliegenden Beschreibung eine Einrichtung bzw. Vorrichtung, die den Zugang zu bestimmten räumlichen Bereichen oder auch den Zugriff auf bestimmte Daten kontrolliert. Ein Zugriff ist nur nach Nachweis einer entsprechenden Berechtigung mittels des ID-Tokens möglich.

Die vorliegende Beschreibung deckt auch ein Computerprogramm mit Programmcode ab, der dazu geeignet ist, ein erfindungsgemäßes Verfahren auszuführen, wenn das Computerprogramm auf einer geeigneten Recheneinrichtung wie insbesondere einem Terminal einer Zugangskontrollvorrichtung abläuft. Es werden sowohl das Computerprogramm selbst als auch abgespeichert auf einem computerlesbaren Medium (Computerprogrammprodukt) beansprucht.

Weitere Vorteile und Ausgestaltungen der Erfindung ergeben sich aus den Unteransprüchen, der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.

### Kurzbeschreibung der Zeichnung

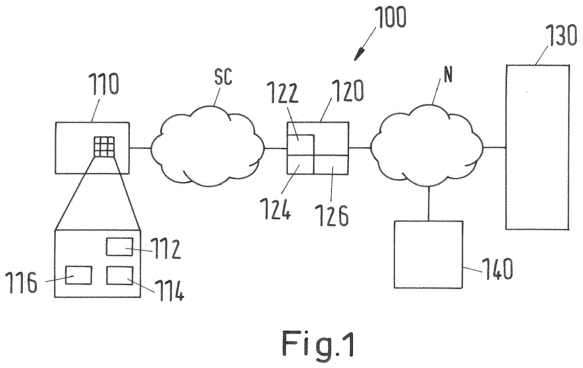

Figur 1 zeigt in stark schematischer Blockdarstellung eine erfindungsgemäße Zugangskontrollvorrichtung.

### Ausführliche Beschreibung

Figur 1 zeigt in stark schematisierter Blockdarstellung eine Zugangskontrollvorrichtung 100. Die Zugangskontrollvorrichtung umfasst einen ID-Token 110 und ein Terminal 120, das über ein Netzwerk N mit einer Sicherungsanlage 140 verbunden ist.

Der ID-Token 110 umfasst in üblicher Weise eine Kommunikationsschnittstelle 112, einen Prozessor 114 und einen Speicher 116. In ähnlicher Weise umfasst das Terminal 120 eine Kommunikationsschnittstelle 122, einen Prozessor 124 und einen Speicher 126. Der ID-Token 110 und das Terminal 120 sind dazu ausgebildet, mittels ihrer Kommunikationsschnittstellen 112, 122 unter Ausbildung eines gesicherten Kommunikationskanals SC miteinander zu kommunizieren.

Die Kommunikation zwischen dem ID-Token 110 und dem Terminal 120 kann drahtgebunden oder drahtlos durchgeführt werden, bspw. kann es sich um eine Nahfeldkommunikation mittels RFID oder dergleichen handeln. Ebenso können der ID-Token 110 und das Terminal 120 über ein Kommunikationsnetzwerk kommunizieren, beispielsweise über dasjenige, mittels welchem das Terminal 120 mit der Sicherungsanlage 140 verbunden ist. Jedes Netzwerk kann drahtgebunden oder drahtlos ausgebildet sein.

Die Sicherungsanlage 140 kann bspw. zur Sicherung des Zugriffs auf oder Zutritt in einen sensitiven Bereich dienen. Dabei kann es sich um einen räumlichen Bereich handeln, in welchem Falle die Sicherungsanlage bspw. als Schließsystem ausgebildet ist. Oder es kann sich um einen Datenbereich (Datenbankzugriff) handeln, auf welchen die Sicherungsanlage den Zugriff kontrolliert.

Der ID-Token 110 dient als "Schlüssel", um den Zutritt zu der Sicherungsanlage zu erlangen.

Das Terminal 120 kann darüber hinaus - wie in dem Ausführungsbeispiel der Figur 1 dargestellt - mit einem Server bzw. Host-Computer 130 verbunden sein, um gegebenenfalls auf zentrale Daten, die im Zusammenhang mit der Authentisierung und/oder der Kommunikation mit dem ID-Token 110 erforderlich sind, zugreifen zu können.

Die Ausgestaltung der Funktionsmodule (Prozessor, Schnittstelle, Speicher) des ID-Tokens 110 wird im folgenden nicht genauer beschrieben, da diese im Bereich des fachmännischen Könnens liegt. So ist es dem Fachmann bspw. ohne weiteres geläufig, bei der Gestaltung des Speichers 116 des ID-Tokens 110 auf die üblicherweise verwendeten Speicherarten (RAM, ROM, EEPROM) zurückzugreifen.

Bei dem ID-Token 110 kann es sich bspw. um eine Chipkarte (auch Smartcard genannt) handeln, deren Chipkarten-Standard bspw. durch die ISO/IEC 7810 Norm in der Fassung vom Januar 2012 und die ISO/IEC 7816 Norm in der Fassung aus dem Jahr 2007 festlegt sind. Des weiteren und insbesondere kann es sich bei dem ID-Token 110 um eine kontaktlose Chipkarte nach der ISO/IEC 14443 Norm in der Fassung vom April 2018 handeln. Der Austausch von Daten zwischen dem ID-Token 110 und dem Terminal 120 kann beispielsweise gemäß dem NFC-Übertragungsstandard (NFC: near field communication - Nahfeldkommunikation) bei einer Frequenz von 13,56 MHz (Resonanzfrequenz) erfolgen.

Bei der kontaktlosen Ankopplung des ID-Tokens 110 an das Terminal 120 erfolgt eine (leichte) Verschiebung der Resonanzfrequenz f_{R} des Hertzschen Dipols an dem Terminal/Lesegerät 120 durch die elektromagnetische Kopplung zwischen ID-Token 110 und Terminal 120. Diese Resonanzverschiebung Δf_{R} ist für eine Kopplung mit einem systemkonformen ID-Token (bspw. konkreter definierter Kartentyp) bezifferbar. Eine Messung der Verschiebung Δf_{R} der Resonanzfrequenz und ein Vergleich mit einem oder mehreren zulässigen hinterlegten Referenzwerten für die Resonanzfrequenzverschiebung stellt daher ein Maß für eine kennzeichnende physikalische Eigenschaft des systemkonformen ID-Tokens dar, das einen Rückschluss darauf zulässt, ob die Anfrage von einem systemkonformen ID-Token oder einem Fremdgerät ausgeht. Bei einem positiven Vergleich wird der Anfrage stattgegeben und der Authentisierungsvorgang wird wie üblich fortgeführt. Bei einem negativen Vergleich wird der Authentisierungsvorgang abgebrochen.

Alternativ oder ergänzend kann die Bearbeitungsdauer einer vorgegebenen Anfrage durch das Terminal 120 an den ID-Token 110 gemessen werden. Bspw. sendet das Terminal 120 auf eine Authentisierungsanfrage zu einem Zeitpunkt to einen definierten Befehl zur Abarbeitung an den ID-Token 110. Der ID-Token antwortet auf den Befehl mit dem Rechenergebnis zu einem Zeitpunkt t₁. Die Bearbeitungsdauer Δt = t₁ - to stellt ein Maß für eine kennzeichnende physikalische Eigenschaft des systemkonformen ID-Tokens und kann wie bereits beschrieben mit hinterlegten Referenzwerten verglichen werden, um festzustellen, ob der Authentisierungsvorgang fortgeführt oder abgebrochen wird.

Die Abarbeitung des definierten Befehls kann mehrmals hintereinander erfolgen (Ping-Pong zwischen Karte und Lesegerät). Es können auch unterschiedliche Befehle einer definierten Befehlsfolge gesendet werden. Es wird dann die Gesamtzeit der Bearbeitung einer Befehlsfolge gemessen und entsprechend mit hinterlegten Referenzwerten für eine Gesamtzeit (von bspw. fünf Befehlen) oder gemittelten Werten verglichen. Dieses Vorgehen ist im Hinblick auf statistische Schwankungen i.A. präziser als eine Einzelmessung, und mögliche Simulationen eines angreifenden Geräts lassen sich besser erkennen.

Eine weitere Variante stellt das Messen des Stromverbrauchs dar, der terminalseitig durch die über die Nahfeldkopplung übertragene elektromagnetische Energie bestimmt und ebenfalls mit Referenzwerten verglichen werden kann.

Zur Durchführung der beschriebenen erfindungsgemäßen Messungen sind an bzw. in dem Terminal 120 geeignete Messelemente vorgesehen, wie insb. Zeitmesselemente, Strommesselemente, Frequenzmesselemente u.dgl. Die von den Messelementen erhobenen Messdaten können in dem Prozessor 124 des Terminals 120 oder einer anderen geeigneten Recheneinrichtung verarbeitet werden. Das Verarbeiten umfasst ggf. ein Umrechnen in einen vergleichbaren Wert bzw. eine vergleichbare Datengröße einer gegebenen physikalischen Einheit, das Vergleichen mit hinterlegten Referenzwerten und die Bestimmung, ob mit der Authentisierungsanfrage fortgefahren wird oder ob sie abgebrochen wird.

Das Angriffserkennungssystem der Erfindung erlaubt somit, zu erkennen, ob eine Authentisierungsanfrage von einer korrekten/systemkonformen physikalischen Einheit wie bspw. einer Chipkarte, ausgeht, die den Zugang zu einem physikalischen oder digitalen Sicherheitsbereich gewährleisten soll, oder ob sie von einem Fremdgerät wie einem Laptop, einem Mobilfunkgerät/Smartphone od.gl. ausgeht. Hierzu werden physikalische Eigenschaften eines anfragenden ID-Tokens überprüft, mit dem Ziel, festzustellen, ob der korrekte physikalische Datenträger mit der richtigen digitalen Information vorliegt. Die ausgewerteten Merkmale können charakteristisch für alle hergestellten ID-Token sein oder Merkmale sein, die kartenspezifisch sind, wegen beispielsweise herstellungsbedingter Unterschiede.

## Patentansprüche

1. Verfahren zur Überprüfung einer Zugangsanfrage in einer Zugangskontrollvorrichtung (100), um festzustellen, ob die Zugangsanfrage von einem systemkonformen physikalischen ID-Token (110) ausgeht oder nicht, indem mindestens eine kennzeichnende physikalische Eigenschaft des systemkonformen ID-Tokens (110) durch die Zugangskontrollvorrichtung (100) überprüft wird.

2. Verfahren nach Anspruch 1, bei dem die Überprüfung auf der Erhebung mindestens eines ein Maß für die tatsächliche Rechenleistung eines anfragenden ID-Tokens (110) darstellenden physikalischen Messparameters basiert.

3. Verfahren nach Anspruch 2, bei dem die Rechenleistung des anfragenden ID-Tokens (110) durch eine Zeitmessung der Bearbeitungsdauer einer vorgegebenen Anfrage durch die Zugangskontrollvorrichtung (100) an den ID-Token (110) erhoben wird.

4. Verfahren nach Anspruch 3, bei dem die vorgegebene Anfrage mehrmals nacheinander an den anfragenden ID-Token (110) gesandt wird und die Gesamtbearbeitungsdauer gemessen wird.

5. Verfahren nach einem der Ansprüche 1 bis 4, bei dem die Überprüfung auf der Erhebung mindestens eines ein Maß für den Stromverbrauch eines anfragenden ID-Tokens (110) darstellenden physikalischen Messparameters basiert.

6. Verfahren nach einem der Ansprüche 1 bis 4, bei dem die Überprüfung auf der Erhebung mindestens eines ein Maß für eine Resonanzfrequenzverschiebung in einem aus ID-Token (110) und Terminal (120) der Zugangskontrollvorrichtung (100) gebildeten Resonanzkreis darstellenden physikalischen Messparameters basiert.

7. Computerprogramm mit Programmcodemitteln, um alle Schritte eines Verfahrens nach einem der Ansprüche 1 bis 6 durchzuführen, wenn das Computerprogramm auf einer entsprechenden Recheneinheit, insb. einem Terminal (120) einer Zugangskontrollvorrichtung (100) ausgeführt wird.

8. Computerprogramm nach Anspruch 7, das auf einem computerlesbaren Datenträger gespeichert ist.

9. Terminal (120) für eine Zugangskontrollvorrichtung (100) zur Authentisierung einer Zugangsberechtigung, wobei das Terminal (120) zur Kommunikation mit einem ID-Token (110) über einen gesicherten Kanal ausgebildet ist und des weiteren einen Prozessor (124) und ein computerlesbares Speichermedium (126) umfasst, wobei in dem Speichermedium (126) computerlesbare Instruktionen gespeichert sind, die bei Ausführung durch den Prozessor (124) die Durchführung eines Verfahrens nach einem der Ansprüche 1 bis 6 bewirken.

10. Zugangskontrollvorrichtung (100) zur Authentisierung einer Zugangsberechtigung, mit einem Terminal (120) gemäß Anspruch 9.
